# EUROPEAN PATENT APPLICATION

(11) **EP 4 588 859 A1**
(43) Date of publication of application: **23.07.2025**
(21) Application number: 24152783.7
(22) Date of filing: 19.01.2024
(51) Int. Cl.: B65G 1/137, B65G 47/38

(54) **PICKING WORKSTATION WITH BUFFER**

(71) Applicant: MOVU, 9160 Lokeren (BE)
(72) Inventor: Goossens, Thomas, 3000 Leuven (BE)
(74) Representative: IP HILLS NV

(57) **Abstract**

An order picking workstation (100) comprising, a picking desk (20) having an inbound surface space (21) for receiving donor load units (41) for storing items (30,31,32,33) to be picked and an outbound surface space (22) for receiving receiver load units (42) for receiving picked items, an automated item buffer (100) comprising a conveyor system (101) carrying multiple buffer locations (102) for temporarily storing items (30,31,32,33) after unloading from said donor load units (41), said multiple buffer locations (102) moving in a closed loop.

## Description

### Field of the Invention

The present invention generally relates to a picking workstation with a rotating buffer that is used in a logistics warehouse. A picking workstation refers to a specific area within a warehouse or distribution center where workers are responsible for selecting and retrieving items from the inventory to fulfill customer orders. The process of picking involves gathering products from their storage locations and preparing them for packaging and shipment. The warehouse may be an automated warehouse where the gathering from the storage location is performed by robots.

### Background of the Invention

Efficient picking is crucial in the logistics and supply chain industry, as it directly impacts order fulfilment speed, accuracy, and customer satisfaction. Picking workstations play a key role in achieving these goals by providing a dedicated space for the organized and systematic retrieval of items from the warehouse inventory.

The function of a picking workstation in logistics is to facilitate the efficient and accurate retrieval of items from the warehouse inventory to fulfil customer orders. The primary goal is to streamline the order picking process, reduce errors, and improve overall productivity in the warehouse or distribution centre. The picking workstation is where the order information is received and processed. This information includes details such as the items to be picked, the quantity required, and the destination.

Workers at the picking workstation are responsible for physically retrieving items from their storage locations in the warehouse. This involves locating the correct products based on the order information. In an automated warehouse, this process of retrieval is typically automated which implies that the workers at the picking station will have to wait for the items to be delivered at their workstation before they can start fulfilling the order. A fast retrieval and delivery of the different items to the picking workstation is therefore of crucial importance in order to improve productivity of the order picking process.

The picking workstations typically comprises a table top that has unavoidably limited surface space. The table top of the picking station will be used by the workers to collect all items to fulfil one or more orders at the same time. Because of this limited surface space, the number of orders that can be simultaneously processed is limited by the available surface space of the picking workstation. More available surface space for gathering retrieved items together with the timely delivery of these items to the picking workstation are aspects of the order picking that many have tried to improve.

### Summary of the Invention

It is an object of the invention to solve the problem of the limited surface space of a regular picking workstation that only allows for a limited number of items to be temporarily stored for picking. The invention also improves the number of orders that can be simultaneously processed, and improves the automated retrieval of items for delivery to the picking workstation.

To this aim and according to a first aspect of the invention, there is provided an order picking workstation comprising, a picking desk having an inbound surface space for receiving donor load units for storing items to be picked and an outbound surface space for receiving receiver load units for receiving picked items, an automated item buffer comprising a conveyor system carrying multiple buffer locations for temporarily storing items after unloading from said donor load units, said multiple buffer locations moving in a closed loop.

In the context of this invention, a picking desk is a dedicated table top surface that typically has a flat work surface for order sorting and packing. This surface should be spacious enough to accommodate multiple orders at once, and designed to facilitate the efficient picking of items from shelves or storage locations to fulfil customer orders. The table top surface is divided in an inbound and an outbound surface space. The inbound surface space is reserved to accommodate the items that arrive at the desk for being picked as part of one of the orders. The inbound surface space is therefore typically populated with items that are retrieved directly from their storage location in the warehouse, or from the automated item buffer of the invention. These items may be individual items or may arrive in donor load units that comprise a number of identical or different items. The donor load units are containers having uniform dimensions that allow easy storage of multiple identical items in the racks of the warehouse.

The outbound surface space is reserved to accommodate receiver load units in which picked items are sorted to fulfil an order. Empty receiver load units are delivered to the outbound surface space. Each receiver load unit typically receives picked items to fulfil one order or a part of an order.

The picking desk of the order picking workstation is complemented with an automated item buffer that is configured to temporarily store a large number of retrieved items from their storage locations in the warehouse or donor load units comprising multiple items. The automated item buffer of the invention comprises a conveyor system of which the multiple temporary storage locations move in a closed loop. Such a circular conveyor system is a type of material handling system that uses a circular path or loop to move goods or materials from one point to another. It is a continuous loop system, and the conveyor belt or other conveying elements form a closed circle, allowing for a constant flow of items. Items may appear multiple times at the same location for as long as they are not removed or lifted from the conveyor system.

The circular conveyor system of the invention comprises multiple temporary storage or buffer locations. These temporary storage or buffer locations are discrete conveying elements that may carry or hold one or multiple items for subsequent picking. A temporary storage or buffer location thus may be a simple segment or discrete portion of the conveyor system. Since the temporary storage locations follow the circular movement of the continuous loop system, the total surface of the circular conveyor system provides a temporary storage buffer for retrieved items. These buffered items will circulate around the conveyor system and will appear at regular intervals at the picking desk for removal.

Items may be stored on the automated item buffer by a worker who may for instance unload the contents of an incoming donor load unit onto the conveyor system. This procedure step has the effect that a retrieved donor load unit, that was delivered to the inbound surface space of the picking desk, is now emptied and can be removed from the inbound surface space of the picking desk freeing up space for new donor load units being retrieved from the automated warehouse. In other words, the automated item buffer advantageously allows freeing up precious desk space from the picking desk. Alternatively may items be stored or placed directly onto the automated item buffer by a robot or other automated retrieval system by emptying the incoming donor load unit onto the conveyor system.

Items may be unloaded from the automated buffer as a picking action of an item that was buffered on the conveyor system to fulfil a part of an order. The unloading action may be performed by a worker as a manual step, in this case will the worker pick an item from the moving conveyor system and drop it into one of the assigned receiver load units. The conveyor system offers the advantage that the circulating conveyor system brings the items close to the picking desk such that the unloading is very efficient. Also, will the same item reappear at regular intervals if left in their temporary storage location, which advantageously gives a worker the opportunity to pick the same item at regular intervals.

The unloading action may also be performed by an automated step that will retrieve an item from the conveyor system when it passes a predetermined position. This predetermined position may for instance be a position where the items pass alongside or above a receiver load unit as such that it is pushed or dropped into the receiver load unit that is positioned at this predetermined position.

Any unloading action partially or fully empties a buffer location, freeing the location for other items to be stored again on this location.

The automated item buffer is automated in the sense that items may be removed from the conveyor system by means of an automated process. Different embodiments for automatically unloading an individual segment or discrete portion of the conveyor system may be considered, and will be further illustrated in further detail in the following section.

The conveyor system may be a horizontal conveyor comprising horizontally arranged buffer locations. In this case the temporary storage locations or buffer locations are arranged in a horizontal plane, such that the buffer locations that are arranged in a loop take up space in a horizontal plane. The total surface space of the automated item buffer can be increased by lengthening the loop.

The conveyor system may be a vertical conveyor comprising vertically arranged buffer locations. In this case the temporary storage locations or buffer locations are arranged in a loop and that move up and down. The storage locations themselves comprise a horizontal surface on which the items can be temporarily stored, or may be configured as containers or baskets. The advantage of this configuration is that it reduces the footprint of the automated item buffer.

The buffer locations of the invention may be arranged as a hatch or trapdoor, which means that one temporary storage location may be configured as a trapdoor with two hinging parts. The trapdoor typically consists of a rectangular or square opening in a surface, such as a floor or ceiling, that is covered by a door or panel. The door is hinged on one or two sides, allowing it to swing or pivot open and closed. This design provides stability and support for the trapdoor, ensuring it can withstand weight or pressure from above, in the case that the buffer location is carrying an item.

The one or two hinging parts are often located on opposite sides of the trapdoor, allowing it to rotate around a horizontal axis. This configuration enables the door to swing open downwards under the weight of the item to be offloaded. A locking mechanism prevents the trapdoor to fall open when the conveyor system is carrying the item around the loop, but can be disengaged for instance when the buffer location passes a predetermined position in said loop to unload the item. The trapdoor mechanism is therefore configured to be remotely opened when disengaging the locking mechanism. After emptying the buffer location by opening the trapdoor, the trapdoor is reclosed such that the buffer location becomes available again for loading it with another item.

The predetermined position to automatically unload an item for instance by opening a trapdoor in the invention may be positioned right above a receiver load unit, such that an item may be unloaded by opening the trapdoor right above said receiver load unit. In this way, items may be picked in a fully automated way such that the worker is relieved from the task of picking the particular item and dropping it into the receiver load unit.

Alternative mechanisms for unloading a buffer location may be considered such as an actuator, a crane, a robot arm or alike that is configured to push or pickup the item or items that are stored and drop them into the receiver load unit. The advantage of this feature of the invention can be to implement an automated item unloading system where the application of a trapdoor or hatch is not possible.

A further improvement that may be considered for application is that a computer system monitors the movement of the conveyor system, such that it can determine which buffer positions are close to or approaching the picking desk, or more specifically which buffer locations are at a position where their stored items can be unloaded into the receiver load unit by one of the automated buffer unloading mechanisms above, such as a trapdoor, hatch, actuator, crane, robot arm or alike. This feature requires that the computer system keeps track of the stored items on each buffer location of the conveyor system such that it can locate a specific item stored somewhere on a buffer location of the conveyor system in order to determine that this buffer location has to be unloaded when it passes the predetermined position. Each storing and unloading action of an item onto a buffer location is then tracked. As such can the full potential of the order picking workstation of the invention be fully harnessed.

Specific examples and preferred embodiments are set out in the dependent claims. Further advantages and embodiments of the present invention will become apparent from the following description and drawings.

### Brief Description of the Drawings

Fig. 1 illustrates an order picking workstation of the invention; the conveyor system is horizontally arranged;
Fig. 2 illustrates a another order picking workstation of the invention that is again horizontally arranged, but where two workers are served at their picking desk by the same conveyor system;
Fig. 3 illustrates an order picking workstation of the invention that is vertically arranged;
Fig. 4 illustrates a detail of a conveyor belt with buffer locations that are configured with trapdoor mechanisms; and
Fig. 5 illustrates a detail of a conveyor belt with buffer locations that are configured with trapdoor mechanisms, but also with an actuator mechanism to unload items from the buffer locations.
Fig. 6 illustrates a suitable computing system for executing the methods of the invention.

### Detailed Description of Embodiment(s)

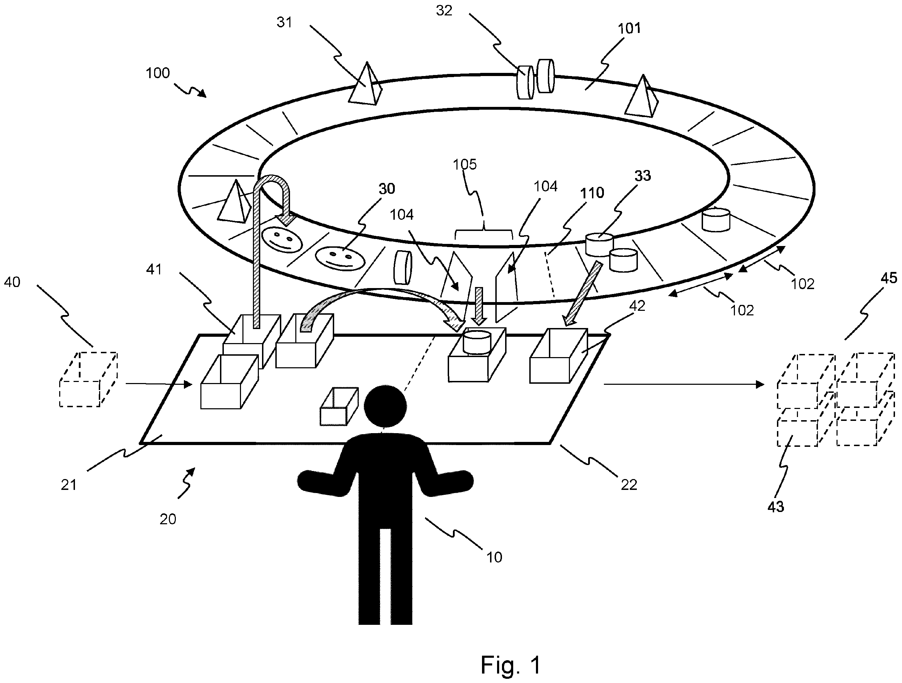

Fig. 1 depicts an order picking workstation 100 of the invention which is operated by one worker 10. The worker is positioned at the a picking desk 20, which may be divided into an inbound surface space 21 and an outbound surface space 22. The inbound surface space 21 is the top surface of the picking desk 20 where donor load units 40 arrive by retrieving them from a central warehouse storage location.

The order picking process is a crucial aspect of warehouse and distribution centre operations. It refers to the systematic and organized method of retrieving products or items from their storage locations in a facility to fulfil customer orders. The goal of the order picking process is to efficiently and accurately gather the right quantities of products to meet customer demands while minimizing errors and optimizing overall operational efficiency.

Before the donor load units 40 arrive at the picking desk 20, a step of order consolidation may be performed: multiple orders may be grouped together for consolidation, especially in facilities that use batch picking or zone picking strategies to improve efficiency. The warehouse layout is crucial for efficient order picking. Products are assigned specific storage locations, and pickers need to know the optimal path to retrieve items. Orders are then assigned to specific pickers or teams. The assignment can be based on various factors, such as the location of items, order priorities, or picker specialization. In an automated warehouse are the pickers at least partially substituted by robotic pickers that collect donor load units from the cebtral warehouse.

As soon as the retrieved donor load units 41 arrive at the picking desk 20, the worker may decide or may be instructed to unload the contents of the donor load units 41 onto the conveyor system 101, such that the stored items are transferred to one of the multiple temporary storage or buffer locations 102 of the conveyor system 101. Empty donor load units 41 are removed from the picking desk 20, or may be moved to the outbound surface space 22 such that the load units can be used as receiver load units 42. The load units are standardized containers, boxes or crates that are used in the central warehouse as standardized storage containers.

Alternatively, may the donor load units 41 that are retrieved from the central warehouse be kept on the inbound surface space 21 of the picking desk 20 for immediate picking of their stored items 30, 31, 32, 33. In this case is the conveyor system 101 not used as a temporary buffer, and may the donor load units 41 clog the working space of the picking desk 20.

Once items 30, 31, 32, 33 are unloaded onto the conveyor system 101, they will move around the system in a loop. The items will circulate around the conveyor system and will reappear at the same locations at fixed intervals. In comparison with a method of storing pickable items in their respective donor load units 41 while leaving them on the inbound surface space 21 of the picking desk 20, will storing of items on the conveyor belt 101 result in the situation that the stored items will be pickable or accessible for a worker for a limited period of time. The stored items will be accessible during the period when they pass a position that is within reach of the worker; that position may be alongside or above the picking desk. The advantage of the use of a conveyor system 101 as a temporary storage or buffer location is that the total available surface space for storing pickable items 30, 31, 32, 33 is increased drastically to comprise the total surface space of the conveyor system 101.

The worker 10 that is positioned at the picking desk 20 can pick items from the different temporary storage locations that are within his reach. Typically, all items to fulfil one order are collected into at least one receiver load unit 42. As soon as the order is complete and all items in the order are picked and collected into the receiver load unit 42, the filled receiver load unit 43 is dispatched to a next step 45 of the order fulfilment process, such as verification of the order, sorting, packing and shipping of the order.

More specifically, the worker 10 that is positioned at the picking desk 20 can pick items from a donor load unit 41 that sits on the inbound surface space 21 of the picking desk 20, or from a storage location 102 on the conveyor system 101 that is within his reach. Storage locations within reach of the worker are the storage locations 102 on the conveyor system 101 that are accessible by the worker at his standing position; i.e. within arms length of the worker. This implies that not all temporary storage or buffer locations 102 are within reach of the worker 10 at every moment in time; but that at least during limited periods of time all temporary storage or buffer locations 102 are within reach of the worker 10.

The order picking process may be facilitated by partially automating the unloading of items from the conveyor system. This may be achieved by providing a means 104 for automatically unloading items 30, 31, 32, 33 from temporary storage or buffer locations 102 to each or some of the available receiver load units 42. This means may be one of a trapdoor, hatch, actuator, crane, robot arm or alike. The means can be preferably activated remotely upon receiving a signal. This signal may for instance be generated by a computer system that keeps track of the stored items on the conveyor system.

When a receiver load unit 42 is destined to receive a particular item, the conveyor system may loop until the buffer location 102 carrying the particular item corresponds to a predetermined position 105 and that matches the position of the receiver load unit 42. When the buffer location 102 carrying the particular item passes over this receiver load unit 42, the trapdoor mechanism may be engaged, such that trapdoor 104 opens and drops the item into the receiver load unit 42. It is clear that the timing of opening up the trapdoor is crucial to achieve the desired outcome. It is therefore preferable that the activation of the trapdoor mechanism is triggered by a computer system that ensures the unloading of the item through the trapdoor at the right moment, and that ensures that the correct item is unloaded. The computer system therefore will have to keep track of all items on the looping conveyor system, by means of keeping track of which items are stored on each particular temporary storage or buffer location 102.

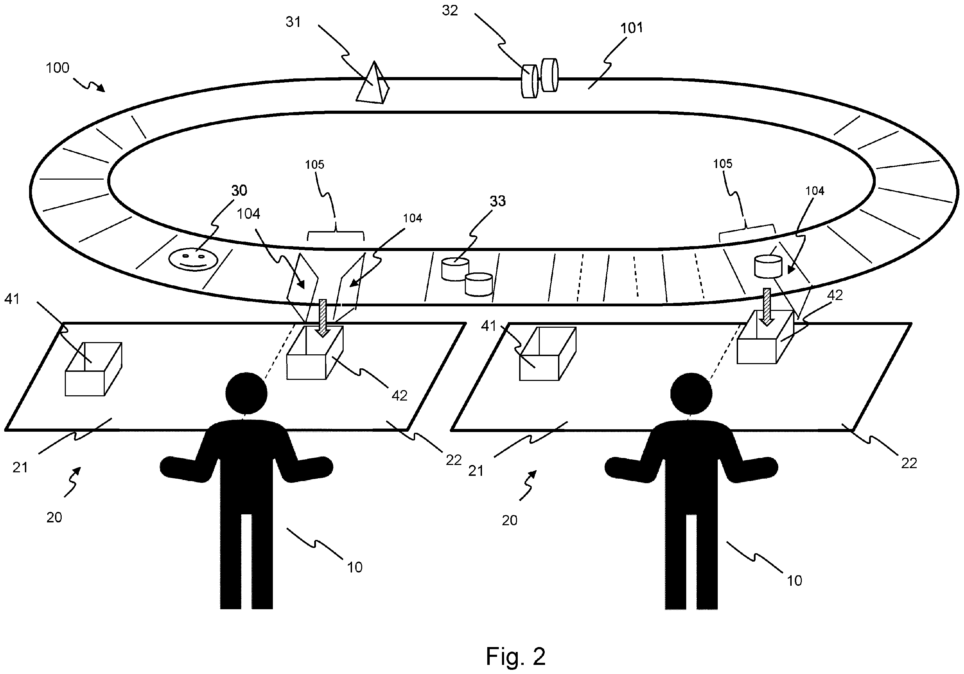

Fig. 2 represents another embodiment of the invention which fundamentally shares the same components as the embodiment of Fig. 1, but wherein a single conveyor system is shared between two picking desks 20 that are operated by two workers 10. In this embodiment, the conveyor system will typically be larger allowing more items to be stored at the same time. The conveyor system will have multiple predetermined positions 105 to unload items through a trapdoor 104 on the conveyor system 101. The multiple predetermined positions 105 cater for the multiple picking desks 20.

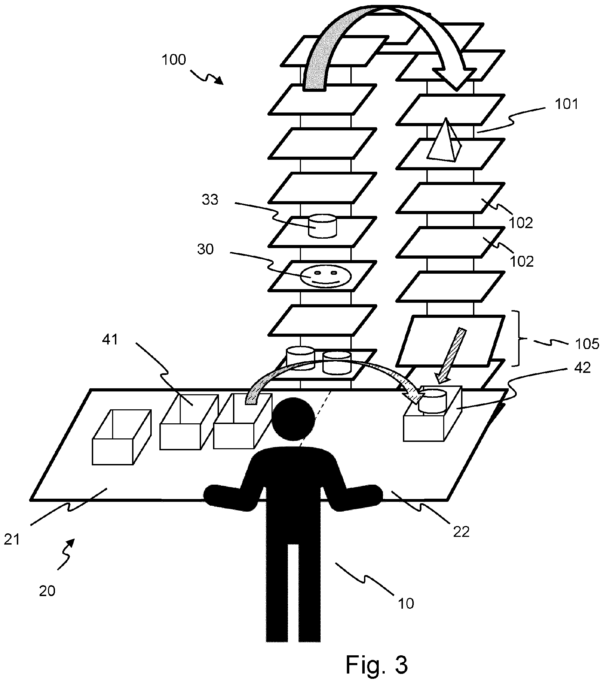

In Fig. 3 another preferred embodiment of the invention is represented wherein the conveyor system is vertically arranged, meaning that the temporary storage or buffer locations 102 are at least partially vertically arranged with respect to each other. The advantage of such a configuration is that the buffer locations are looping vertically, i.e. up and down, around the conveyor system 101 and that the footprint of such a configuration is smaller compared to a horizontally arranged configuration. Each buffer location consists of a suspended platform that may carry items.

The distance between neighbouring buffer locations will have to chosen such that they can accommodate the items to be stored while considering their expected heights. In this configuration, rather than using buffer locations with a trapdoor, the buffer locations may be unloaded in an automated way by tilting the suspended platform such that the stored item slides from the buffer location into the receiver load unit 42.

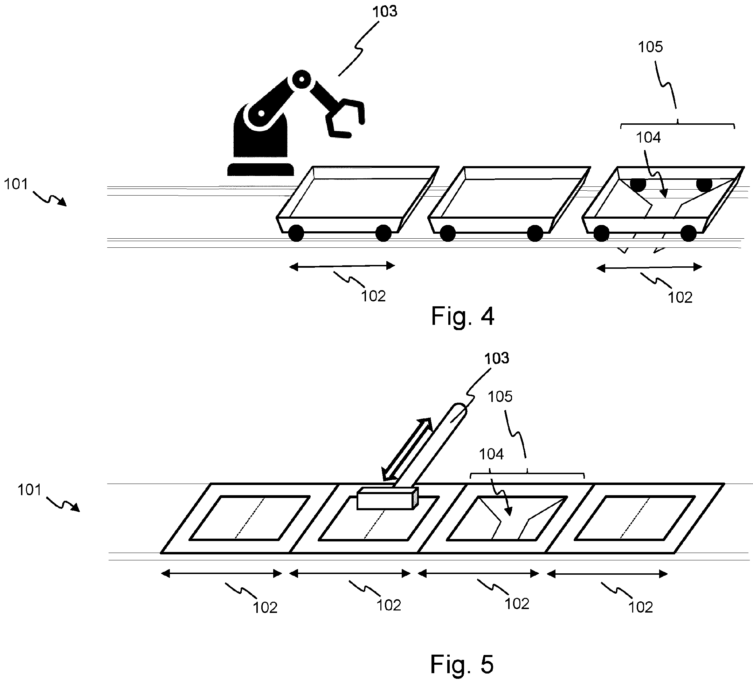

Fig. 4 depicts a detail of a horizontal conveyor system 101 comprising three horizontally arranged buffer locations 102. In this embodiment the buffer locations are configured as carts running on a track. Each cart is configured with a trapdoor 104 that comprises two parts that hinge from the front and back end of the cart. The trapdoor can be opened at predetermined position 105 to unload the item that is stored on the trapdoors' surface. Alternatively, may the stored item that is carried on the surface of the cart be unloaded by a robot arm 103.

Fig. 5 depicts a detail of a horizontal conveyor system 101 comprising four horizontally arranged buffer locations 102. In this embodiment the buffer locations 102 are configured as frames, segments or sections that are part of a sliding conveyor belt. Each frame is configured with a trapdoor 104 that comprises two parts that hinge from the front and back end of the frame 102. The trapdoor can be opened at predetermined position 105 to unload the item that is stored on the trapdoors' surface. Alternatively, may the stored item that is carried on the surface of the cart be unloaded by a sliding actuator 103 that pushes the item from the buffer location into the destined receiver load unit 42.

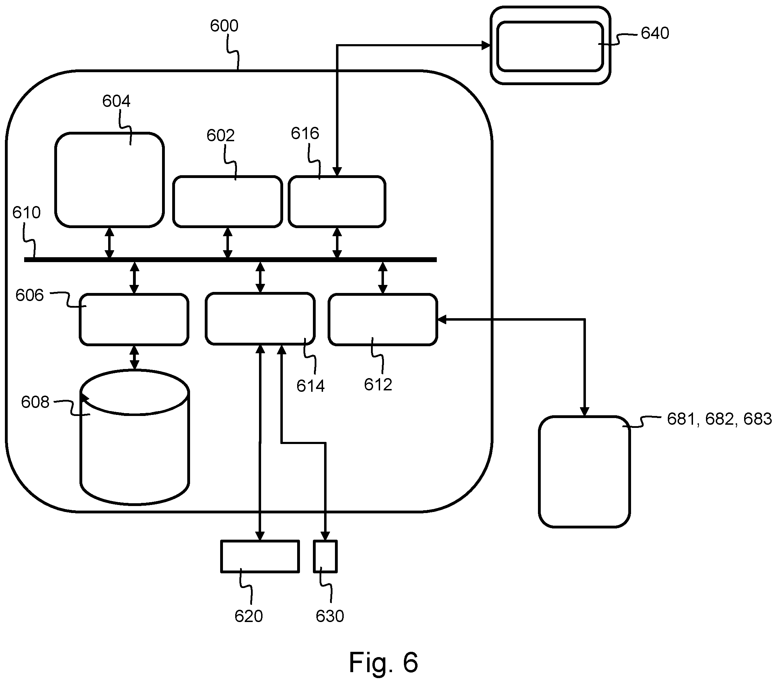

Fig. 6 shows a suitable computing system 600 to keep track of each the stored items on the buffer locations of the conveyor system, and to operate the unloading mechanism of the invention such as a trapdoor, hatch, actuator, crane, robot arm or alike. Computing system 600 may in general be formed as a suitable general-purpose computer and comprise a bus 610, a processor 602, a local memory 604, one or more optional input interfaces 614, one or more optional output interfaces 616, a communication interface 612, a storage element interface 606, and one or more storage elements 608. Bus 610 may comprise one or more conductors that permit communication among the components of the computing system 600. Processor 602 may include any type of conventional processor or microprocessor that interprets and executes programming instructions. Local memory 604 may include a random-access memory (RAM) or another type of dynamic storage device that stores information and instructions for execution by processor 602 and/or a read only memory (ROM) or another type of static storage device that stores static information and instructions for use by processor 602. Input interface 614 may comprise one or more conventional mechanisms that permit an operator or user to input information to the computing device 600, such as a keyboard 620, a mouse 630, a pen, voice recognition and/or biometric mechanisms, a camera, etc. Output interface 616 may comprise one or more conventional mechanisms that output information to the operator or user, such as a display 640, etc. Communication interface 612 may comprise any transceiver-like mechanism such as for example one or more Ethernet interfaces that enables computing system 600 to communicate with other devices and/or systems, for example with other computing devices 681, 682, 683. The communication interface 612 of computing system 600 may be connected to such another computing system by means of a local area network (LAN) or a wide area network (WAN) such as for example the internet. Storage element interface 606 may comprise a storage interface such as for example a Serial Advanced Technology Attachment (SATA) interface or a Small Computer System Interface (SCSI) for connecting bus 610 to one or more storage elements 608, such as one or more local disks, for example SATA disk drives, and control the reading and writing of data to and/or from these storage elements 608. Although the storage element(s) 608 above is/are described as a local disk, in general any other suitable computer-readable media such as a removable magnetic disk, optical storage media such as a CD or DVD, -ROM disk, solid state drives, flash memory cards, ... could be used.

As used in this application, the term "circuitry" may refer to one or more or all of the following: (a) hardware-only circuit implementations such as implementations in only analog and/or digital circuitry and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application.

## Claims

1. An order picking workstation (100) comprising,
a picking desk (20) having an inbound surface space (21) for receiving donor load units (41) for storing items (30,31,32,33) to be picked and an outbound surface space (22) for receiving receiver load units (42) for receiving picked items,
an automated item buffer (100) comprising a conveyor system (101) carrying multiple buffer locations (102) for temporarily storing items (30,31,32,33) after unloading from said donor load units (41), said multiple buffer locations (102) moving in a closed loop.

2. The order picking workstation (100) according to claim 1, wherein said conveyor system (101) is a horizontal conveyor comprising horizontally arranged buffer locations (102), or a vertical conveyor comprising vertically arranged buffer locations (102).

3. The order picking workstation (100) according to claim 1, wherein at least one of said multiple buffer locations (102) is arranged as a hatch or trapdoor (104) such that said at least one of said multiple buffer locations (102) can offload said items at a predetermined position (105) in said loop.

4. The order picking workstation (100) according to claim 1, wherein said conveyor system (101) is arranged with an actuator (103) configured to offload said items (30,31,32,33) from said at least one of said multiple buffer locations (102) at a predetermined position (105) in said loop.

5. The order picking workstation (100) according to claim 3, wherein said predetermined position (105) in said loop is located above one of said receiver load units (42) such that said hatch or trapdoor (104) is configured to open and offload said items (30,31,32,33) into said receiver load unit (42).

6. The order picking workstation (100) according to claim 4, wherein said predetermined position (105) in said loop is located above one of said receiver load units (42) such that said actuator (103) is configured to push and drop said items (30,31,32,33) into said receiver load unit (42).

7. The order picking workstation (100) according to any of the preceding claims, wherein a computer system keeps track of each of said items (30,31,32,33) on each of said multiple buffer locations (102) and is configured to operate said hatch, trapdoor (104) or actuator (103) to drop said items (30,31,32,33) into said receiver load unit (42) at said predetermined position (105).
